# EUROPEAN PATENT SPECIFICATION

(11) **EP 0 507 965 B1**
(45) Date of publication and mention of the grant of the patent: **16.07.1997**
(21) Application number: 91918944.9
(22) Date of filing: 30.10.1991
(51) Int. Cl.: C08L 81/02, C08L 23/00

(54) **POLYARYLENE SULFIDE RESIN COMPOSITION AND PRODUCTION THEREOF**
POLYARYLENSULFIDHARZMISCHUNG UND IHRE HERSTELLUNG
COMPOSITION A BASE DE RESINE DE SULFURE DE POLYARYLENE ET PRODUCTION DE CETTE COMPOSITION

(30) Priority: 30.10.1990 JP 293157/90
(43) Date of publication of application: 14.10.1992
(73) Proprietor: POLYPLASTICS CO. LTD., Chuo-Ku Osaka-shi Osaka 541 (JP)
(72) Inventor: SERIZAWA, Hajime, 21-4, Sankeidai, Shizuoka 411 (JP); KUBOTA, Masaru, 976-5, Hoshiyama, Shizuoka 418 (JP)
(74) Representative: W.P. THOMPSON & CO.
(86) International application number: JP9101486
(87) International publication number: WO9207910

(56) References cited:
- EP-A- 0 199 278
- EP-A- 0 425 207
- JP-A-61 275 353
- JP-A-63 275 664
- JP-A-64 051 462

## Description

The present invention relates to an improved polyarylene sulfide resin composition and a process for the preparation of the same.

More particularly, it relates to a polyarylene sulfide resin composition which is obtainable by blending a polyarylene sulfide resin with a polyolefin resin in the presence of a filler and which is excellent in mechanical properties, such as toughness and impact resistance, and heat resistance, and a process for the preparation of the same.

Recently, a thermoplastic resin which has high heat and chemical resistances and is excellent in flame retardance has been demanded as the materials of the components of electrical or electronic appliances, automobile devices or chemical instruments.

A polyarylene sulfide resin represented by polyphenylene sulfide is one of the resins satisfying this demand and is uncostly for its physical properties, so that the demand therefor has increased. However, a polyarylene sulfide resin has a significant disadvantage that it is poorer in toughness and is more brittle than engineering plastics such as nylon, polycarbonate, polyacetal and polybutylene terephthalate. The addition of a fibrous reinforcement such as glass fiber or carbon fiber has been a general practice in order to overcome this disadvantage and has been known as a means for remarkably improving the resin in various performances such as strengths, stiffness, toughness and heat resistance. However, even a composition prepared by adding such a fibrous filler to a polyarylene sulfide resin is yet inferior to the above engineering plastics in respect of toughness, so that the application of the composition to many fields is restricted, though the composition is excellent in chemical resistance, heat resistance and flame retardance.

Meanwhile, although the blending of a polyarylene sulfide resin with a ductile polymer is an effective method for improving the impact resistance of the resin, no polyarylene sulfide resin composition which is sufficiently improved in toughness and impact resistance without impairing the characteristics inherent in a polyarylene sulfide resin has been found as yet, because there are few polymers which are ductile and excellent in heat and chemical resistances and because such polymers are poor in the compatibility with a polyarylene sulfide resin. Although a polyolefin resin is one of inexpensive ductile polymers, a blend comprising a polyarylene sulfide resin and a polyolefin resin is poor particularly in the compatibility between the resins, so that a molded article made therefrom is liable to cause surface delamination. In order to solve this problem, for example, a process of further adding a polyolefin resin modified with an epoxy compound or unsaturated carboxylic acid was proposed (see JP-A-63-213562 and JP-A-64-26670). However, the composition according to this process is still insufficient for practical use and therefore a further improvement in the toughness and impact resistance of the resin has been expected.

The inventors of the present invention have made intensive studies on components which react with a polyarylene sulfide resin under such conditions that the backbone of a polyarylene sulfide resin hardly undergoes breakage to thereby improve the compatibility of a polyarylene sulfide resin with a ductile polyolefin resin, thus giving a polyarylene sulfide resin composition improved in physical properties such as mechanical properties, and have found that a molding material of practical use which can give a molded article excellent in surface appearance, is excellent in mechanical properties, particularly in toughness and impact resistance, and exhibits high heat resistance can be obtained by melt-kneading a polyarylene sulfide resin and a polyolefin resin together with an alkoxysilylated polymer at a specific temperature for a specific time. The present invention has been accomplished on the basis of this finding.

The present invention provides a polyarylene sulfide resin composition obtainable by blending 100 parts by weight of a resin component consisting essentially of
(A) 99 to 20 parts by weight of a polyarylene sulfide resin and
(B) 1 to 80 parts by weight of a polyolefin resin other than polymer (C) with
(C) 0.2 to 20 parts by weight of an alkoxysilylated polymer selected from alkoxysilylated polyethylene, alkoxysilylated polypropylene and alkoxysilylated ethylene-ethyl acrylate copolymer and
(D) 0 to 400 parts by weight of one or more fillers selected from fibrous, powdery and flaky ones, and a process for the preparation of a polyarylene sulfide resin composition which comprises melt-kneading a mixture comprising at least the components (A), (B), (C) and, if necessary, (D) under heating for at least 30 seconds.

The polyarylene sulfide resin to be used in the present invention as the component (A) is one mainly constituted of repeating units represented by the formula: - (Ar - S) - (wherein Ar is an arylene group).

Examples of the arylene group include p-phenylene, m-phenylene, o-phenylene and substituted phenylene groups (wherein the substituent is an alkyl group preferably having 1 to 5 carbon atoms or a phenyl group), p,p'-diphenylene sulfone, p,p'-biphenylene, p,p'-diphenylene ether, p,p'-diphenylenecarbonyl and naphthalene groups.

Although an arylene sulfide homopolymer constituted of the same repeating units among the arylene sulfide groups described above may be used in the present invention, the use of a copolymer constituted of a plurality of repeating units different from each other is preferable in some cases in respect of the processability of the resulting composition.

Particularly, a substantially linear homopolymer composed of p-phenylene sulfide repeating units is preferably used.

The copolymer to be used in the present invention may be any one constituted of two or more repeating units different from each other selected from among the arylene sulfide units mentioned above. Particularly, a copolymer comprising p-phenylene sulfide units as a major component together with m-phenylene sulfide units is preferably used. More particularly, it is suitable in respect of heat resistance, moldability, mechanical characteristics and so on to use a substantially linear copolymer comprising at least 60 mole %, still preferably at least 70 mole % of p-phenylene sulfide units.
Further, it is preferable that the copolymer contain 5 to 40 mole %, still preferably 10 to 25 mole % of m-phenylene sulfide units. Among such copolymers, a block copolymer (for example, one disclosed in JP-A-61-14228) is preferred to a random one, because the former is superior to the latter in processability, heat resistance and mechanical properties.

Although the polyarylene sulfide resin to be used in the present invention as the component (A) may be either a polymer improved in the processability in molding by crosslinking the above relatively low-molecular polymer oxidatively or thermally to increase its melt viscosity or a substantially linear polymer prepared by the polycondensation of a monomer component mainly comprising a difunctional monomer, in many cases, the latter polymer is superior to the former in respect of the physical properties of the resulting molded article.

According to the present invention, a resin composition prepared by blending a branched or crosslinked polyarylene sulfide resin prepared from a monomer having at least three functional groups as a part of the monomer component with the linear polymer described above may be suitably used.

The polyolefin resin to be used in the present invention as the component (B) includes polyethylene, polypropylene, polymethylpentene, polybutylene, ethylene-propylene copolymers, ethylene-propylene-diene copolymers and other polymers and copolymers mainly composed of olefin units. These polyolefin resins may be used either alone or as a mixture of two or more of them. Particularly, the use of a polyolefin having a flexural modulus of 20000 kg/cm² or below, preferably 10000 kg/cm² or below, for example, a polyolefin elastomer such as an ethylene-propylene copolymer, polybutene or ethylene-propylene-diene copolymer is remarkably effective in improving the toughness of a polyarylene sulfide resin.

Although the amount of the polyolefin resin to be used as the component (B) varies depending upon the objective physical properties and use of the composition, the polyarylene sulfide resin and the polyolefin resin are preferably used in amounts of 95 to 50 parts by weight and 5 to 50 parts by weight, respectively. If the amount of the polyolefin resin is less than 1 part by weight, the resulting composition will not be sufficiently improved in toughness, while if it exceeds 80 parts by weight, the thermal deformation temperature of the resulting composition will remarkably lower unfavorably, though it varies also depending upon the kind of the polyolefin resin used.

The present invention is characterized by using an alkoxysilylated polymer (C) in addition to the above resin components.

The alkoxysilylated polymer to be used in the present invention as the component (C) is one which has an alokoxysilane group bonded to the molecular chain and is compatible with the polyolefin resin (B).
The component (C) preferably contains an alkoxysilane group in such an amount as not to cause significant gelation. Generally, it is preferable to use a polymer containing an alkoxysilane group in an amount of 0.05 to 5 mol, still preferably 0.2 to 1 mol per mol of the polymer. When the alkoxysilane content in the component (C) is too high, the resulting composition will cause gelation to exhibit poor moldability, while when it is too low, the compatibility will not be sufficiently improved unfavorably. It is suitable that the alkoxy group constituting the alkoxysilane group of the component (C) has 1 to 4 carbon atoms, particularly 1 or 2 carbon atoms.

Although the amount of the component (C) to be used varies depending upon the objective physical properties and use, it is 0.2 to 20 parts by weight, preferably 1 to 10 parts by weight, per 100 parts by weight of the total amount of the polyarylene sulfide resin [component (A)] and the polyolefin resin [component (B)]. When the amount is too small, the compatibility of the resins with each other and the mechanical properties of the resulting composition will be hardly improved, while when it is too large, the resulting composition will be viscous to cause troubles in molding.

The present invention is characterized by using the component (C) in addition to the components (A) and (B) to thereby solve the problems of a molded article made from a composition comprising only the components (A) and (B) due to the poor compatibility between the components (A) and (B), thus enabling the production of a molded article which is excellent in surface appearance and is remarkably improved in physical properties such as toughness.

Although the filler (D) is not an essential component in the present invention, the addition thereof is preferable for producing a molded article which is excellent in mechanical strengths, heat resistance, dimensional stability, electrical properties and other performances. The filler (D) may be selected from among fibrous, powdery and flaky ones depending upon the object.

The fibrous filler includes inorganic fibrous materials, for example, fibers of glass, asbestos, carbon, silica, silica/alumina, zirconia, boron nitride, silicon nitride, boron and potassium titanate, and fibers of metals such as stainless steel, aluminum, titanium, copper and brass. Among them, glass fiber and carbon fiber are most representative. Further, the fibrous filler includes high-melting organic fibrous materials, for example, polyamide, fluororesin and acrylic resin.

The powdery filler includes carbon black, silica, quartz powder, glass bead, glass powder, silicates such as calcium silicate, aluminum silicate, kaolin, talc, clay, diatomaceous earth and wollastonite, metal oxides such as iron oxide, titanium oxide and alumina; metal carbonates such as calcium carbonate and magnesium carbonate; metal sulfates such as calcium sulfate and barium sulfate; silicon carbide, silicon nitride, boron nitride and various metal powders.

The flaky filler includes mica, glass flake and various metal foils.

These inorganic fillers may be used alone or as a mixture of two or more of them. The simultaneous use of a fibrous filler, particularly glass or carbon fiber with a powdery or flaky filler is particularly effective in producing an article which is excellent not only in mechanical strengths but also in dimensional accuracy and electrical properties.

The amount of the inorganic filler is at most 400 parts by weight per 100 parts by weight of the total amount of the resins (A) and (B). If the amount exceeds 400 parts by weight, the resulting composition will be poor in processability in molding and toughness. The use thereof in an amount of 250 parts by weight or below is particularly preferable.

Although the composition of the present invention can be prepared by various known processes, a mixture comprising at least the three components (A), (B) and (C) must be heat-melted and kneaded for at least 30 seconds. The component (D) and/or other components may be added either in this heat melting and kneading step together with the above three components or in other steps. For example, the composition can be prepared by homogeneously mixing the components (A), (B), (C) and (D) together on a mixing machine such as a tumbler or Henschel mixer and melt-kneading the obtained mixture on a single- or twin-screw extruder to obtain pellets. In this preparation, it is preferable to employ a process which comprises pulverizing a part or the whole of the components (A) and (B), homogeneously mixing the obtained powder with the component (C) on a blender, mixing the obtained mixture with the residual components and melt-kneading the obtained mixture. Alternatively, the component (D) may be added during or after the melt-kneading. Particularly, it is preferable to add the component (D) after the completion of the reaction of the resin with the component (C) under melt-kneading, because such addition tends to be more effective in improving the toughness.

The melt-kneading is preferably conducted at a temperature higher than the melting point of the resin components by 5 to 100°C, more preferably 10 to 60°C. The melt-kneading at too high a temperature unfavorably causes decomposition and abnormal reaction.

Although the melt-kneading time varies depending upon the kneading temperature or the kind or amount of the component (C), it is at least 30 seconds and preferably no more than 15 minutes, more preferably 1 to 10 minutes.

Although the mechanism of the function and effect of the alkoxysilylated polymer (C) according to the present invention has not been sufficiently elucidated, the function and effect are inferred to result from the compatibility between a polyarylene sulfide resin and a polyolefin resin improved by the bonding of the component (C) having a molecular chain well compatible with a polyolefin resin to a polyarylene sulfide resin through the alkoxysilane group. This inference is supported by the results of the electron microscopy of the section of a molded article made from the composition.

The composition of the present invention may further contain the conventional additives so far as the use thereof is not deviated from the object of the present invention and examples thereof include antioxidant, heat stabilizer, lubricant, nucleating agent, ultraviolet absorber, coloring agent, mold release agent and so forth. Further, a small amount of other thermoplastic resin may be added to the composition as an auxiliary component.

These additives may be added either in the melt kneading step described above or in some other steps.

The polyarylene sulfide resin composition of the present invention is improved in the compatibility between the components (A) and (B) to exhibit the following effects:
(1) a molded article made from the composition is excellent in surface appearance and does not cause surface delamination,
(2) a molded article made from the composition is improved in mechanical properties such as toughness and impact resistance,
   and
(3) the composition exhibits suitable heat resistance and mechanical characteristics which are well balanced.

The present invention will now be described in more detail by referring to the following Examples, though the present invention is not limited by them.

### Examples 1 to 5 and Comparative Examples 1 and 2

30 parts by weight of an ethylene-propylene copolymer (EPR) (a product of Japan Synthetic Rubber Co., Ltd.; EP912P) as the component (B) was added to 70 parts by weight of a polyphenylene sulfide polymer (PPS) (m.p.: 285°C, melt viscosity: 500 P as determined at 310°C and a shear rate of 1200 sec⁻¹) as the component (A), followed by the addition of an alkoxysilylated ethylene-ethyl acrylate copolymer (a product of Du Pont-Mitsui Chemicals Co., Ltd.: AS-252 (C-1) in an amount specified in Table 1 as the component (C). The obtained blend was premixed on a Henschel mixer for 5 minutes. If necessary, a glass fiber (chopped strand having a diameter of 10 µm and a length of mm) was further added, followed by mixing. The obtained premix was melt-kneaded on an extruder at a cylinder temperature of 310°C (residence time: about 2 minutes) to give pellets of a polyarylene sulfide resin composition.

The pellets were molded into an ASTM test piece on an injection molding machine at a cylinder temperature of 310°C and a mold temperature of 150°C. This test piece was subjected to tensile and impact tests. The surface appearance thereof was observed with the naked eye to determine whether surface delamination occurred or not.

The results are given in the Table 1.

### Examples 6 to 8 and Comparative Examples 3 and 4

The same procedure as that of the Examples 1 to 5 was repeated except that the same PPS polymer (A), EPR resin (B) and alkoxysilylated ethylene-ethyl acrylate copolymer as those used in the Examples 1 to 5 were used each in amounts specified in Table 2.

The results are given in the Table 2.

### Examples 9 to 13 and Comparative Examples 5 to 9

The same procedures as those of the Example 2 and the Comparative Example 1 were each repeated except that the EPR resin (B) was replaced by polyethylene (a product of Mitsui Petrochemical Industries, Ltd.; Hizex 2100J), polypropylene (a product of Sumitomo Chemical Co., Ltd.; Noblen X101A), polymethylpentene (a product of Mitsui Petrochemical Industries, Ltd.; TPX RT18XB), polybutene-1 (a product of Mitsui Petrochemical Industries, Ltd.; Polybutene M0400) or an ethylene-propylene-diene copolymer (EPDM) (a product of Japan Synthetic Rubber Co., Ltd.; EP161SP) in an amount specified in Table 3.

The results are given in the Table 3.

### Examples 14 and 15 and Comparative Examples 10 and 11

The same procedures as those of the Examples 9 and 13 and the Comparative Examples 5 and 9 were each repeated except that a glass fiber was further added.

The results are given in the Table 4.

### Examples 16 to 21

The same procedures as those of the Examples 2 and 9 to 13 were each repeated except that the component (C-1) was replaced by an alkoxysilylated polyethylene (a product of Mitsubishi Petrochemical Co., Ltd.; Linchrone-X ) (C-2) in an amount specified in Table 5.

The results are given in the Table 5.

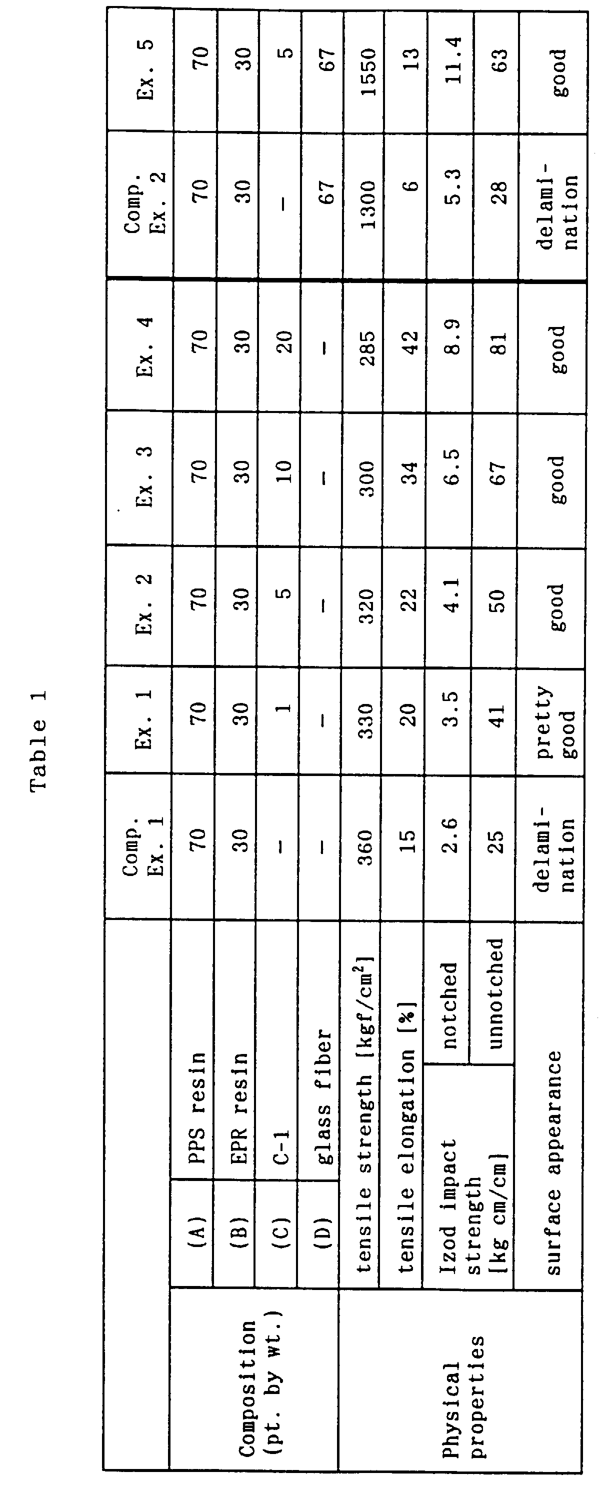

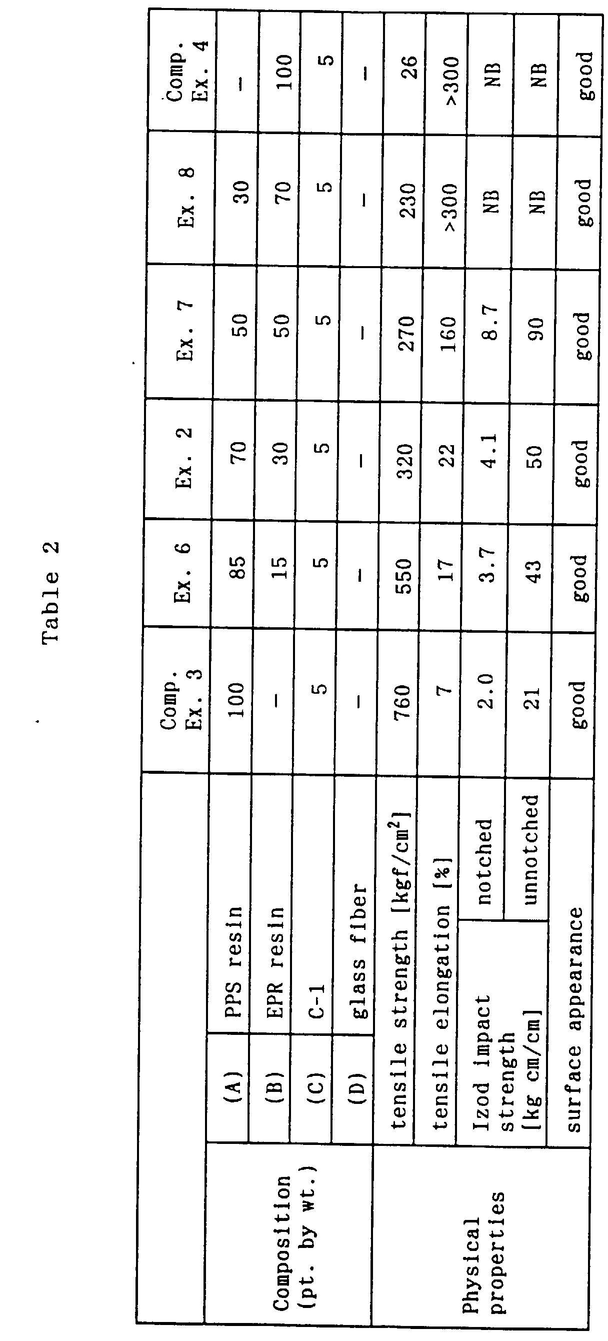

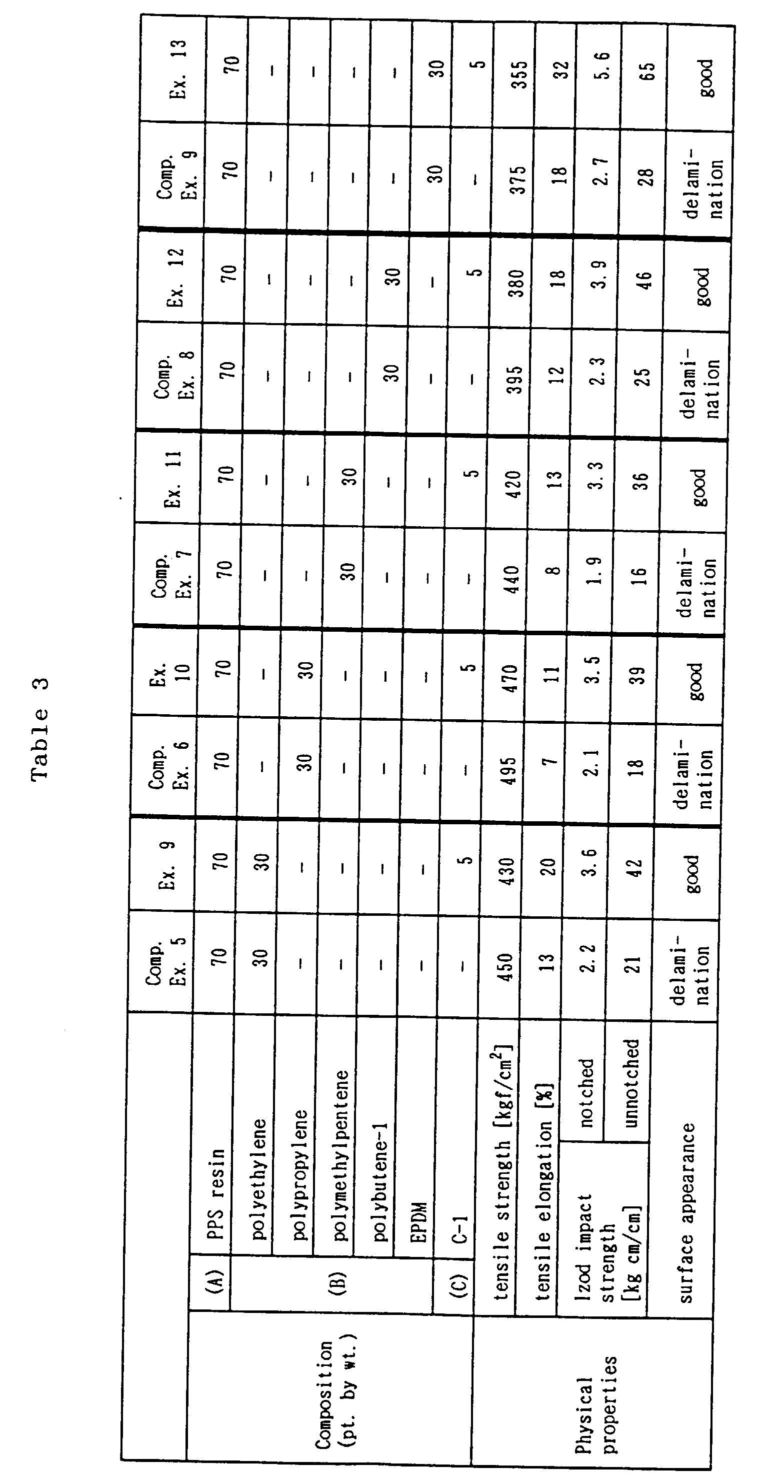

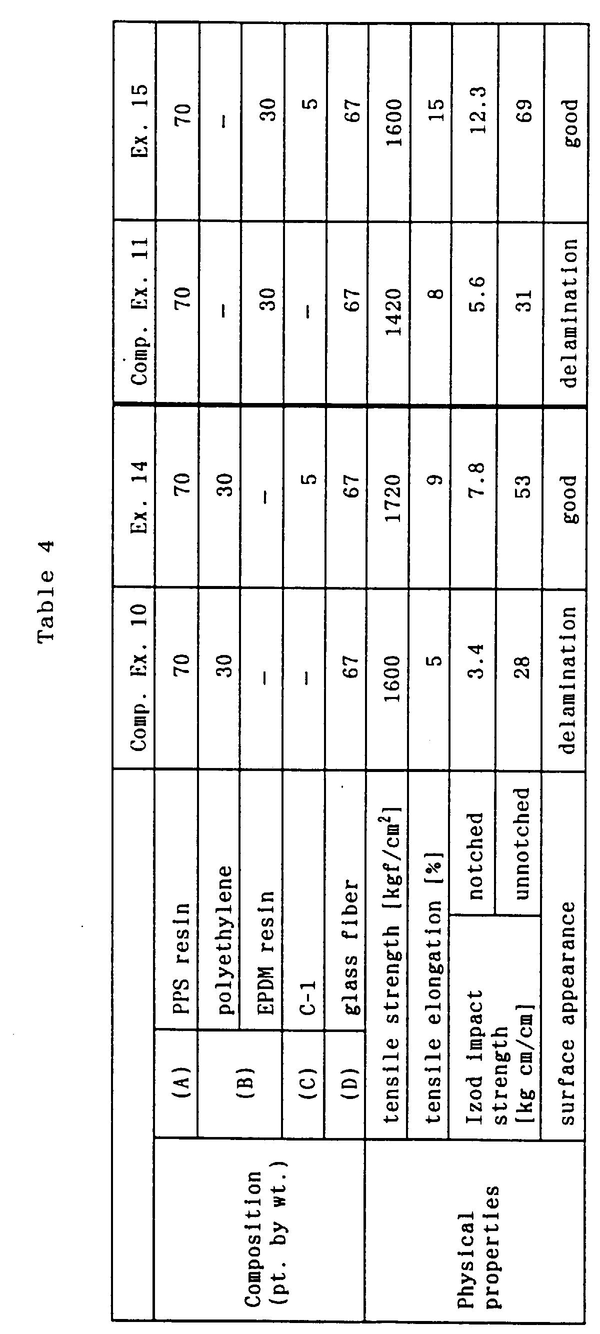

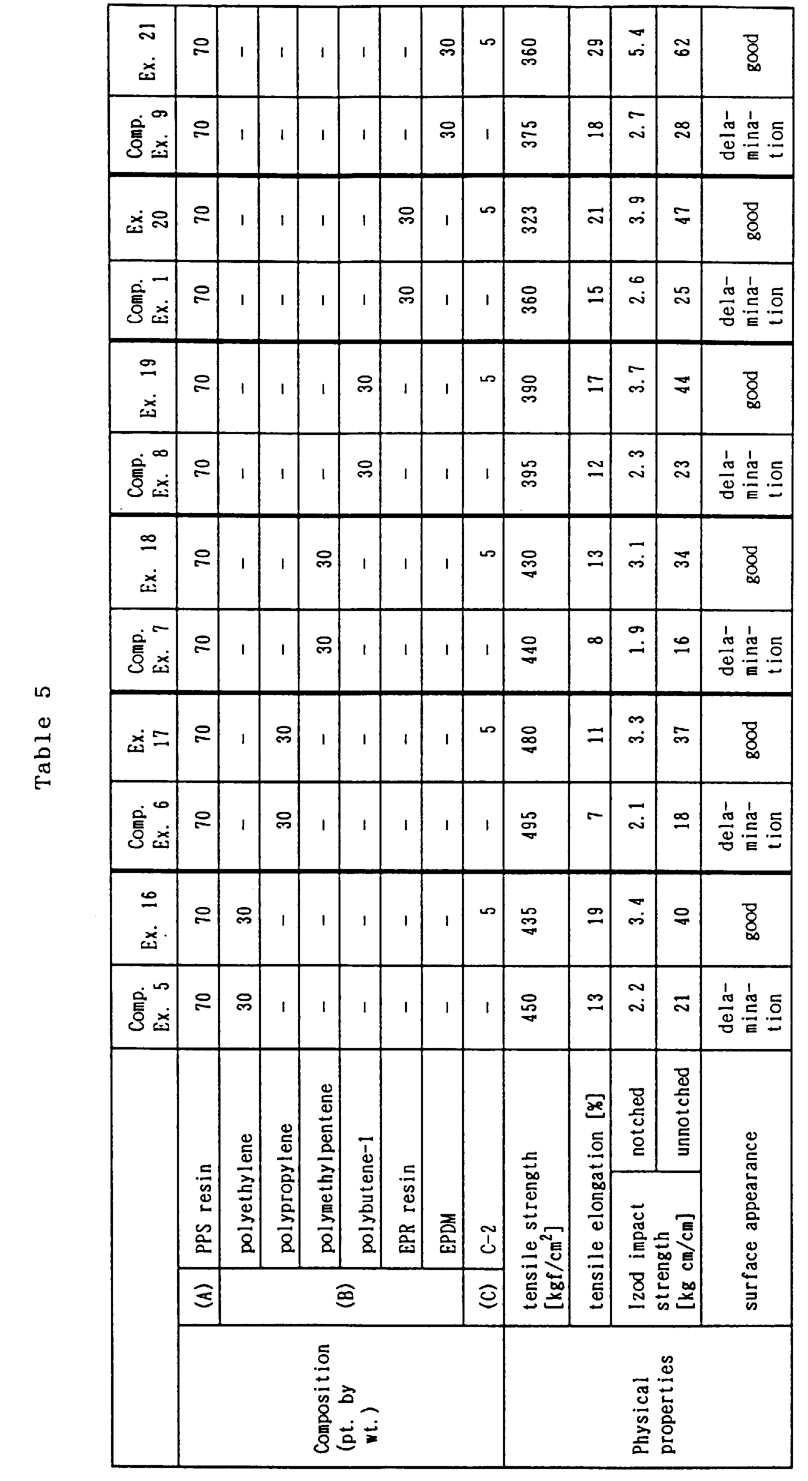

## Claims

1. A polyarylene sulfide resin composition obtainable by blending 100 parts by weight of a resin component consisting essentially of
(A) 99 to 20 parts by weight of a polyarylene sulfide resin and
(B) 1 to 80 parts by weight of a polyolefin resin other than polymer (C) with
(C) 0.2 to 20 parts by weight of an alkoxysilylated polymer selected from alkoxysilylated polyethylene, alkoxysilylated polypropylene and alkoxysilylated ethylene-ethyl acrylate copolymer and
(D) 0 to 400 parts by weight of one or more fillers selected from fibrous, powdery and flaky ones.

2. A resin composition according to claim 1, wherein the resin (A) is mainly constituted by repeating units -Ar-S- wherein Ar is selected from p-phenylene, m-phenylene, o-phenylene, C₁ to C₅ alkylsubstituted phenylene, phenyl-substituted phenylene, p,p'-diphenylene sulfone, p,p'-biphenylene, p,p'-diphenylene ether, p,p'-diphenylene carbonyl and naphthalene groups.

3. A resin composition according to claim 1, wherein resin (A) is a homopolymer.

4. A resin composition according to claim 3, wherein resin (A) is a substantially linear homopolymer composed of p-phenylene sulfide repeating units.

5. A resin composition according to claim 1, wherein resin (A) is a copolymer comprising p-phenylene sulfide units as a major component and m-phenylene sulfide units as a minor component.

6. A resin composition according to claim 5, wherein resin (A) is a substantially linear copolymer, comprising at least 60 mole % of p-phenylene sulfide units.

7. A resin composition according to claim 5, wherein resin (A) comprises 5 to 40 mole % of m-phenylene sulfide units.

8. A resin composition according to any preceding claim, wherein the resin (B) comprises one or more polymers selected from polyethylene, polypropylene, polymethylpentene, polybutylene, ethylene-propylene copolymers and ethylene-propylene-diene copolymers.

9. A resin composition according to any preceding claim, wherein the resin component consisting essentially of (A) and (B) contains 95 to 50 parts by weight (A) and 5 to 50 parts by weight (B).

10. A resin composition according to any preceding claim, wherein polymer (C) contains alkoxysilane groups in an amount of 0.05 to 5 mole per mole of the polymer.

11. A resin composition according to any preceding claim, wherein the alkoxy group of the polymer (C) has 1 to 4 carbon atoms.

12. A resin composition according to any preceding claim, wherein the amount of polymer (C) per 100 parts by weight of (A) and (B) is 1 to 10 parts by weight.

13. A resin composition according to any preceding claim, wherein the amount of filler (D) per 100 parts by weight of (A) and (B) is 250 parts by weight or below.

14. A resin composition according to claim 13, wherein (D) comprises a fibrous and a powdery or flaky filler in combination.

15. A process for the preparation of a polyarylene sulfide resin composition which comprises melt-kneading a mixture comprising the components (A), (B), (C) and (D) as set forth in claim 1 under heating for at least 30 seconds.

16. A process according to claim 15 wherein the melt-kneading is conducted for 1 to 10 minutes.

17. A process according to claim 15 or 16, wherein the melt-kneading is conducted at a temperature higher than the melting point of the resin components by 5 to 100°C.

## Patentansprüche

1. Polyarylensulfid-Harzzusammensetzung, erhältlich durch Vermischen von 100 Gew.Teilen einer Harzkomponente, im wesentlichen bestehend aus
(A) 99 bis 20 Gew.Teilen eines Polyarylensulfidharzes und
(B) 1 bis 80 Gew.Teilen eines anderen Polyolefinharzes als Polymer (C), mit
(C) 0,2 bis 20 Gew.Teilen eines alkoxysilylierten Polymers, ausgewählt aus alkoxysilyliertem Polyethylen, alkoxysilyliertem Polypropylen und alkoxysilyliertem Ethylen-Ethylacrylat-Copolymer, und
(D) 0 bis 400 Gew.Teilen von einem oder mehreren Füllstoffen, ausgewählt aus faserigen, pulverförmigen und schüppchenförmigen.

2. Harzzusammensetzung nach Anspruch 1, worin das Harz (A) sich hauptsächlich zusammensetzt aus Wiederholungseinheiten -Ar-S-, worin Ar ausgewählt ist aus p-Phenylen-, m-Phenylen-, o-Phenylen-, C₁ bis C₅-alkylsubstituierten Phenylen-, phenylsubstituierten Phenylen-, p,p'-Diphenylensulfon-, p,p'-Biphenylen-, p,p'-Diphenylenether-, p,p'-Diphenylencarbonylund Naphthalingruppen.

3. Harzzusammensetzung nach Anspruch 1, worin das Harz (A) ein Homopolymer ist.

4. Harzzusammensetzung nach Anspruch 3, worin das Harz (A) ein im wesentlichen lineares Homopolymer ist, das sich aus p-Phenylensulfid-Wiederholungseinheiten zusammensetzt.

5. Harzzusammensetzung nach Anspruch 1, worin das Harz (A) ein Copolymer ist, umfassend p-Phenylensulfideinheiten als Hauptkomponente und m-Phenylensulfideinheiten als Nebenkomponente.

6. Harzzusammensetzung nach Anspruch 5, worin das Harz (A) ein im wesentlichen lineares Copolymer ist, umfassend zumindest 60 Mol% p-Phenylensulfideinheiten.

7. Harzzusammensetzung nach Anspruch 5, worin das Harz (A) 5 bis 40 Mol% m-Phenylensulfideinheiten umfaßt.

8. Harzzusammensetzung nach einem der vorhergehenden Ansprüche, worin das Harz (B) ein oder mehrere Polymere enthält, ausgewählt aus Polyethylen, Polypropylen, Polymethylpenten, Polybutylen, Ethylen-Propylen-Copolymeren und Ethylen-Propylen-Dien-Copolymeren.

9. Harzzusammensetzung nach einem der vorhergehenden Ansprüche, worin die Harzkomponente, die im wesentlichen aus (A) und (B) besteht, 95 bis 50 Gew.Teile (A) und 5 bis 50 Gew.Teile (B) enthält.

10. Harzzusammensetzung nach einem der vorhergehenden Ansprüche, worin das Polymer (C) Alkoxysilangruppen in einer Menge von 0,05 bis 5 Mol pro Mol Polymer enthält.

11. Harzzusammensetzung nach einem der vorhergehenden Ansprüche, worin die Alkoxygruppe des Polymers (C) 1 bis 4 Kohlenstoffatome hat.

12. Harzzusammensetzung nach einem der vorhergehenden Ansprüche, worin die Menge des Polymers (C) pro 100 Gew.Teilen von (A) und (B) 1 bis 10 Gew.Teile ist.

13. Harzzusammensetzung nach einem der vorhergehenden Ansprüche, worin die Menge des Füllstoffes (D) pro 100 Gew.Teilen von (A) und (B) 250 Gew.Teile oder weniger ist.

14. Harzzusammensetzung nach Anspruch 13, worin (D), einen faserigen und einen pulverförmigen oder schüppchenförmigen Füllstoff in Kombination enthält.

15. Verfahren zur Herstellung einer Polyarylensulfid-Harzzusammensetzung, umfassend das Schmelzkneten einer Mischung, umfassend die Komponenten (A), (B), (C) und (D), wie in Anspruch 1 angegeben, unter Erwärmen für wenigstens 30 Sekunden.

16. Verfahren nach Anspruch 15, worin das Schmelzkneten für 1 bis 10 Minuten durchgeführt wird.

17. Verfahren nach Anspruch 15 oder 16, worin das Schmelzkneten bei einer Temperatur durchgeführt wird, die um 5 bis 100°C höher ist als der Schmelzpunkt der Harzkomponenten.

## Revendications

1. Une composition de résine polysulfure d'arylène pouvant être obtenue en mélangeant 100 parties en poids d'un composant résineux constitué essentiellement de
(A) 99 à 20 parties en poids d'une résine polysulfure d'arylène et
(B) 1 à 80 parties en poids d'une résine polyoléfinique autre que le polymère (C) avec
(C) 0,2 à 20 parties en poids d'un polymère alcoxysilylé choisi parmi un polyéthylène alcoxysilylé, un polypropylène alcoxysilylé et un copolymère éthylène-acrylate d'éthyle alcoxysilylé et
(D) 0 à 400 parties en poids d'une ou plusieurs charges choisies parmi des charges en fibres, en poudre et en paillettes.

2. Une composition de résine selon la revendication 1, dans laquelle la résine (A) est principalement constituée de motifs récurrents -Ar-S- où Ar est choisi parmi les groupes *p*-phénylène, *m*-phénylène, *o*-phénylène, phénylène à substituant alkyle en C₁-C₅, phénylène à substituant phényle, *p,p'*-sulfonylbisphényle, *p,p'*-diphénylène, *p,p'*-oxybisphényle, *p,p'*-carbonylbisphényle et naphtylène.

3. Une composition de résine selon la revendication 1, dans laquelle la résine (A) est un homopolymère.

4. Une composition de résine selon la revendication 3, dans laquelle la résine (A) est un homopolymère sensiblement linéaire composé de motifs sulfure de *p*-phénylène récurrents.

5. Une composition de résine selon la revendication 1, dans laquelle la résine (A) est un copolymère comprenant des motifs sulfure de *p*-phénylène comme constituant principal et des motifs sulfure de *m*-phénylène comme constituant secondaire.

6. Une composition de résine selon la revendication 5, dans laquelle la résine (A) est un copolymère sensiblement linéaire comprenant au moins 60 mol % de motifs sulfure de *p*-phénylène.

7. Une composition de résine selon la revendication 5, dans laquelle la résine (A) comprend 5 à 40 mol % de motifs sulfure de *m*-phénylène.

8. Une composition de résine selon l'une quelconque des revendications précédentes, dans laquelle la résine (B) comprend un ou plusieurs polymères choisis parmi le polyéthylène, le polypropylène, le polyméthylpentène, le polybutylène, les copolymères éthylène-propylène et les copolymères éthylène-propylène-diène.

9. Une composition de résine selon l'une quelconque des revendications précédentes, dans laquelle le composant résineux constitué essentiellement de (A) et (B) contient 95 à 50 parties en poids de (A) et 5 à 50 parties en poids de (B).

10. Une composition de résine selon l'une quelconque des revendications précédentes, dans laquelle le polymère (C) contient des groupes alcoxysilane en une quantité de 0,05 à 5 moles par mole du polymère.

11. Une composition de résine selon l'une quelconque des revendications précédentes, dans laquelle le groupe alcoxy du polymère (C) compte 1 à 4 atomes de carbone.

12. Une composition de résine selon l'une quelconque des revendications précédentes, dans laquelle la quantité de polymère (C) est de 1 à 10 parties en poids pour 100 parties en poids de (A) et (B).

13. Une composition de résine selon l'une quelconque des revendications précédentes, dans laquelle la quantité de charge (D) est de 250 parties en poids ou moins pour 100 parties en poids de (A) et (B).

14. Une composition de résine selon la revendication 13, dans laquelle (D) comprend une association d'une charge en fibres et d'une charge en poudre ou en paillettes.

15. Un procédé pour la préparation d'une composition de résine polysulfure d'arylène, qui consiste à malaxer à l'état fondu un mélange comprenant les composants (A), (B), (C) et (D), tels que définis dans la revendication 1, sous chauffage pendant au moins 30 secondes.

16. Un procédé selon la revendication 15, dans lequel le malaxage à l'état fondu est conduit pendant 1 à 10 minutes.

17. Un procédé selon la revendication 15 ou 16, dans lequel le malaxage à l'état fondu est conduit à une température supérieure de 5 à 100°C au point de fusion des composants résineux.
